# EUROPEAN PATENT APPLICATION

(11) **EP 2 474 233 A1**
(43) Date of publication of application: **11.07.2012**
(21) Application number: 10813682.1
(22) Date of filing: 30.08.2010
(51) Int. Cl.: A23C 21/08

(54) **CONDENSED MILK-LIKE WHEY COMPOSITION AND METHOD FOR PRODUCING SAME**

(30) Priority: 02.09.2009 JP 2009202853
(71) Applicant: Meiji Co., Ltd., Tokyo 136-8908 (JP); Tsukuba Dairy Products Co., Ltd., Ishioka-shi, Ibaraki 315-0025 (JP)
(72) Inventor: ICHIBA Mikihiko, Odawara-shi Kanagawa 2500862 (JP); OHTOMO Hideo, Odawara-shi Kanagawa 2500862 (JP); SUZUKI Naoki, Omitama-shi Ibaraki 311-3436 (JP); NAKAZATO Masayuki, Omitama-shi Ibaraki 311-3436 (JP)
(74) Representative: Ahner, Francis
(86) International application number: PCT/JP2010/064721
(87) International publication number: WO 2011/027733

(57) **Abstract**

The condensed milk-like whey composition according to the present invention is obtainable by carrying out the heat sterilization and concentration of a liquid whey formulation, wherein the liquid whey formulation is prepared by adding auxiliary materials containing sucrose to a liquid whey preliminarily heated at high temperature. The condensed milk-like whey composition according to the present invention causes no scorching during the manufacture and has good physical properties and taste.

## Description

### REFERENCES TO RELATED APPLICATIONS

The present application is based on Japanese Patent Application No. 2009-202853 filed on September 2, 2009, claims the advantages of the priority, and all of which is incorporated herein by reference.

### BACKGROUND OF THE INVENTION

### Field of the Invention

The present invention relates to condensed milk-like composition containing whey, that is, condensed milk-like whey composition (whey-containing condensed milk), and a process for preparing it.

### Related Arts

Whey is a by-product in the process for preparing cheese and the like, and contains large amounts of a variety of essential amino acids, proteins, vitamins and sugars. Whey is known to have a high nutritive value. However, whey in the simple dry product is poor in taste and thus unsatisfactory for food. Accordingly, a variety of foodstuffs have been tried to prepare with use of the nutritive value of whey for the purpose of the effective utilization of whey.

Condensed milk generally refers to condensed products of whole milk or skim milk under reduced pressure, and includes sweetened condensed milk and unsweetened condensed milk depending on the presence of sucrose. Condensed milk is used for business applications and also as a sweetener of coffee, tea, fruits and the like. Condensed milk is generally known to be prepared by adding sucrose to raw milk, followed by sterilization by forewarming, condensation with a vacuum concentrator, and crystallization by cooling (e.g., see MARUZEN SHOKUHIN SOGO JITEN (Comprehensive Dictionary of Foods by Maruzen), March, 1998).

Thus, it is contemplated to prepare a condensed milk-like composition with use of whey as a main raw material.
Several condensed milk-like compositions containing the whey have already been known, but all of these compositions are prepared by using powdery whey (whey powder) but not liquid whey (e.g., whey stock solution) and thus are the so-called condensed milk-like compositions of reduced type. However, it is known that the condensed milk-like compositions of reduced type containing whey powder are poor in milk taste and caramel-like taste as well.

Therefore, it has been desired for condensed milk-like whey composition (whey-containing condensed milk) containing whey as a main raw material and having excellent taste and physical properties to be developed.

For example, Japanese Patent No. 3274018 discloses low calorie sugar containing condensed milk-like compositions which have been prepared by adding saccharified products of reducing starches such as reducing starch syrup and reducing malt sugar or sugar alcohols such as erythritol, sorbitol, mannitol, lactitol, maltitol to milks. In that specification, the raw materials of the milks include a whey protein together with casein and the like. However, nothing is described with respect to the whey as a main ingredient in the patent specification, and while the examples include the uses of raw milk, whole milk powder and skim milk powder, no embodiment of the use of whey is described.

Furthermore, the process for preparing a skim milk-like composition is described in Japanese Patent Publication No. H04-051145 in which the ratio of the solid fat in the fats and oils as the raw material is adjusted to 40% by weight or less, and the fat globules are homogenized to a diameter of 1 µm or less with an emulsifier (lecithin) at the predetermined concentration.

Japanese Patent Laid-Open Publication No. H02-219539 discloses a process for preparing a sweetened condensed whole milk, in which increase in the viscosity of the milk with the passage of time during its storage is restrained by adding a-lactose to the condensed milk on its cooling and crystallization after concentration in the process for preparing the condensed milk.

However, the condensed milk-like compositions described in these literatures are not the ones containing whey, and the processes for preparing the compositions are different as well. Needless to say, no examinations have been performed with regard to problems which would be caused in the case of using whey powder as the main raw material.

Furthermore, it has been described in the literature (Cheng, L.J., Birkett, R.A., Augustin, M.A. and Clarke, P.T.: "Viscosity of sweetened condensed milk concentrates: effects of preheat treatment applied during powder manufacture", Aust.J. Dairy Technol., Vol. 55, p. 115-118) that the examination of the relationship between the viscosities of reducing type condensed milks containing powdered skim milks, butter oils and sucrose as the raw materials and the heating conditions of the manufacturing processes of powdered skim milks revealed the increases in viscosity when the extent of whey protein denaturation by heating in the powdered skim milk was >50%.

Japanese Patent Laid-Open Publication No. 2004-147628 discloses the emulsified fat and oil compositions containing a gustatory material produced from dairy products such as fermented milk and enzyme treated butterfat, non-fat milk solids selected from whey protein concentrate (WPC), milk protein concentrate (MPC), sodium caseinate, and casein, and sweetening materials such as sugar alcohol and the like and having milk taste and rich taste comparable to milk or condensed milk.

However, no examinations were described in these literatures on the problems which would be caused in the manufacture of condensed milk-like compositions containing whey powder as a main ingredient.

### SUMMARY OF THE INVENTION

The present inventors have now found that when liquid whey was used in place of powdered whey (whey powder) for preliminary sterilization by heating and auxiliary materials such as sucrose were added for heat sterilization and concentration, scorching was scarcely found on the heating surfaces of the pasteurizer or concentrator and the condensed milk-like compositions had adequate viscosities without excessively increasing their viscosities and also good taste.
It was unexpected that these problems could be dissolved by using the liquid whey sterilized by preliminary heating. The present invention is based on these observations.

Thus, the object of the present invention is to provide a condensed milk-like composition containing whey which is not scorched during manufacture and has good physical properties and taste.

The condensed milk-like whey composition according to the present invention is the one obtainable by carrying out the heat sterilization and concentration of a liquid whey formulation which is prepared by adding auxiliary materials containing sucrose to the liquid whey preliminarily heated at high temperature.

The condensed milk-like whey composition of the present invention is preferably the one which is obtainable by subjecting the liquid whey to the heat treatment at high temperature in the range of 100 to 150 °C for 1 to 30 seconds.

In the condensed milk-like whey composition of the present invention, the liquid whey used has preferably a solid content in the range of 5 to 35% by weight.

In the condensed milk-like whey composition of the present invention, the whey stock solution which is the by-product in the manufacture of cheese is preferably used as the liquid whey.

The condensed milk-like whey composition of the present invention is the one which is obtained by subjecting the liquid whey formulation to the heat treatment at a temperature in the range of 100 to 150 °C for 1 to 30 seconds.

Furthermore, the process for preparing the condensed milk-like whey composition of the present invention, comprises adding the auxiliary materials containing sucrose to the liquid whey preliminarily heated at high temperature to obtain the liquid whey formulation, and heat sterilizing and concentrating the liquid whey formulation.

According to one preferred embodiment of the present invention, the heat treatment of the liquid whey at high temperature is carried out at a temperature of 100 to 150 °C for 1 to 30 seconds in the preparation process of the present invention.

According to another preferred embodiment of the present invention, the li,quid whey has a solid content in the range of 3 to 35% by weight in the preparation process of the present invention.

According to one more preferred embodiment of the present invention, the whey stock solution is used as the liquid whey in the preparation process of the present invention.

According to one yet further preferred embodiment of the present invention, the heat sterilization of the liquid whey formulation is carried out at a temperature in the range of 100 to 150 °C for 1 to 30 seconds in the preparation process of the present invention.

The present inventors have found that a condensed milk-like composition prepared by the use of a liquid whey in place of the whey powder under the condition equivalent to that of the known condensed milk-like composition containing the whey powder, while it is excellent in taste, exhibited an extremely high viscosity as compared with the conventional condensed milks containing milk and physical properties inappropriate to a condensed milk. In addition, when a liquid whey formulation was prepared by adding auxiliary materials such as sucrose to the liquid whey and subjected to heat sterilization and concentration procedures, the liquid formulation was decreased in thermal stability (thermal resistance) and adhesion (scorching) became prominent on the heating surfaces (heat transfer surfaces) of the pasteurizer or concentrator. Thus, it was difficult to obtain a condensed milk-like whey composition which exhibits improvement in taste but causes no scorching during the manufacture and exhibits good physical properties such as viscosity only by the use of the liquid whey instead of the whey powder as the main raw material.

. In the present invention, the liquid whey to be used is further subjected to preliminary heat treatment at high temperature. That is, the condensed milk-like whey composition is obtained by preliminarily heat sterilizing the liquid whey to be used, to which auxiliary materials such as sucrose is added, heat sterilized and concentrated to give a condensed milk-like whey composition. The preparation of the condensed milk-like whey composition by such a method as described above will enable the improvement of the heat stability and the great suppression of the scorching on the heating surfaces of the pasteurizer and concentrator. It is thus predicated that the suppression of scorching is important from the viewpoint of the improvement of the quality of the product and the improvement of the productivity. Furthermore, the condensed milk-like whey composition thus obtained has not excessively increased in its viscosity and also has an appropriate viscosity and good taste.

### BRIEF DESCRIPTION OF THE DRAWINGS

Figure 1 schematically shows the manufacturing process of Comparative Example 1 in Example 1.
Figure 2 schematically shows the manufacturing process of the composition of the present invention in Example 1.

### DETAILED DESCRIPTION OF THE INVENTION

### Condensed Milk-like Whey Composition

The condensed milk-like whey composition according to the present invention is, as described above, the one obtained by heat sterilization and concentration of a liquid whey formulation which is prepared by adding auxiliary materials including sucrose to the liquid whey preliminarily heated at high temperature. The condensed milk-like whey composition described herein refers to a composition containing whey for condensed milk which is prepared by using whey in place of whole milk or the like as a main raw material as compared with the conventional sweetened condensed milk prepared by using whole milk or skim milk (i.e., "containing 8% or more of milk fat, 28% or more of milk solids and 58% or less of sugar contents" in the regulation regarding to the ingredient specifications of milk and milk products (regulation of milk and the like in Japan)) and has a similar physical properties. More specifically, it refers to a composition containing whey for condensed milk which exhibits the viscosity described later and contains the liquid whey in the range of 55 to 80% by weight in terms of liquid whey stock solution (without membrane process) and sucrose in the range of 5 to 35% by weight.

The condensed milk-like whey composition according to the present invention has the following characteristics. That is to say, the condensed milk-like whey composition can be set up at a price lower than the conventional condensed milks, because whey used as the main raw material is more inexpensive than whole milk or skim milks. Nevertheless, the taste, physical properties, quality and the other features are in the level equivalent to or higher than those of the conventional condensed milks. Moreover, the condensed milk-like whey composition has the high content of whey protein and thus has a nutritive value higher than the conventional condensed milks. In addition, whey is a by-product of cheese and its effective utilization is a problem to be solved. However, the present invention will provide a means for solving the problem.

In the present invention, the term "liquid whey" means the whey stock solution or its concentrate and excludes the whey powder prepared by heat powder treatment and the like and their reduction solutions. Therefore, as far as the liquid whey has the meaning described above, it may include whey protein concentrate (WPC) and whey protein isolate (WPI).

In this connection, the term "whey stock solution" means the by-products in the manufacture of cheese or casein. In the present invention, it is desirable to use the by-product in the manufacture of cheese as the whey stock solution from the viewpoint that the whey stock solution has appropriate taste and pH and the good taste and physical properties are realized in the condensed milk-like whey composition.

Furthermore, the term "concentrate" means a concentrate obtained from the whey stock solution with use of concentration procedures such as vacuum concentration, concentration via membrane filtration (e.g., filtration via NF (nanofiltration) membrane and filtration via ultrafiltration (UF) membrane) but not concentration by heating such as evaporation. At this time, the whey stock solution may be preheated (e.g., at 70 to 80 °C (preferably, at 73 to 78 °C)) for 5 to 30 seconds (preferably 10 to 15 seconds) before concentration, if necessary.

In addition, the solid content of the liquid whey is preferably in the range of 5 to 35% by weight, more preferably 5 to 30% by weight, further preferably 5 to 25% by weight, further more preferably 5 to 20% by weight. In this connection, the liquid whey has the whey protein concentration preferably in the range of 0.5 to 12% by weight (on the assumption of WPC 35 at the upper limit), more preferably 0.5 to 10% by weight, further preferably 0.5 to 8% by weight, further more preferably 0.5 to 7% by weight. It is preferable from the viewpoint of the taste, physical property (viscosity), quality (storability, crystallization degree of lactose) and transport efficiency to be in such ranges as described above.
Furthermore, in the present invention, the solid content in an aqueous solution can be easily measured by the usual methods and apparatuses such as method for the simplified measurement of moisture and sand mixing method.

The pH of the liquid whey is, if necessary, desirably adjusted before heat treatment at high temperature. On this occasion, pH is adjusted to the range of about 6.0 to 8.5, preferably about 6.4 to 7.0. In this connection, pH is preferably adjusted with pH regulators. Hereupon, the pH regulators which can be used include, although not specifically limited if these regulators can adjust pH to the ranges described above and have safety which can be used as foodstuffs, typically sodium hydroxide, potassium hydroxide, sodium hydrogen carbonate, sodium carbonate, and the like.

According to the preferred embodiment of the present invention, the heat treatment at high temperature of the liquid whey is performed under the temperature condition in the range of 100 to 150 °C for 1 to 30 seconds. The temperature condition is more preferably in the range of 110 to 140 °C, further preferably 110 to 130 °C, further more preferably 115 to 125 °C, particularly preferably about 120 °C, and the heating period in this case is more preferably in the range of 1 to 25 seconds, further preferably 3 to 25 seconds, and still more preferably 5 to 20 seconds per each case.

In the present invention, the liquid whey formulation is obtained by adding the auxiliary materials containing sucrose to the liquid whey preliminarily heat treated at high temperature. In this connection, the auxiliary materials include, in addition to sucrose, the other saccharides, dextrins, milk protein concentrates (MPC), hydrogenated palm oils, organic acids such as citric acid, organic acid salts such as citrate, phosphates, minerals, perfumes such as flavor, and the like.

In the present invention, the liquid whey formulation is prepared by adding the auxiliary materials containing sucrose to the liquid whey and performing the homogenization treatment. In this connection, the homogenization treatment can be carried out, for example, by using a homogenizer at a temperature in the range of about 80 to 90 °C, preferably about 83 to 87 °C under the condition of about 10 to 20 MPa and about 3000 to 500 L/h. Also, plural homogenization treatments may be carried out under various conditions.

The liquid whey formulation contains the liquid whey in the range of 55 to 80% by weight, preferably 60 to 75% by weight, more preferably 65 to 70% by weight in terms of liquid whey stock solution (without membrane process) and sucrose in the range of 5 to 35% by weight, preferably 10 to 30% by weight, more preferably 10 to 25% by weight.

In the present invention, the liquid whey formulation obtained above is heat sterilized and concentrated. In this connection, the heat sterilization treatment of the liquid whey formulation is conducted under the temperature condition in the range of 100 to 150 °C for 1 to 30 seconds.
The temperature condition is more preferably in the range of 110 to 140 °C, further preferably110 to 130 °C, still more preferably115 to 125 °C, particularly preferably about 120 °C, and the heating period in this case is more preferably in the range of 1 to 25 seconds, further preferably 3 to 25 seconds, and still more preferably 5 to 20 seconds per each case.

Furthermore, in the heat sterilization treatment, the aqueous solution may be further pressurized. In the case of the heat sterilization treatment, sterilization pressure, for example, in the range of about 1 to 10 kg/cm² is usually applied in order to prevent the boiling of the aqueous solution. In the sterilization treatment in the present invention, such pressure may also be applied in addition to heating. In addition, the apparatuses for heat treatment at high temperature include, for example, a plate heat exchanger, a tube heat exchanger, a steam injection pasteurizer, a steam infusion pasteurizer, an electrically heated pasteurizer, and the like.

In the concentration treatment, it is preferable to carry out the treatment, for example, by vacuum concentration or freeze concentration, and it is more preferable to carry out the treatment by vacuum concentration. When the concentration procedure is carried out, the concentration level can be adjusted so as the solid content of a final composition to be in the range of 60 to 80% by weight (Example: 72.3 to 72.5), preferably 70 to 75% by weight, more preferably 71 to 74% by weight. On this occasion, the concentration level may also be adjusted on the basis of the Brix value measured.

The composition obtained by the heat sterilization and concentration is typically cooled after concentration described above and then crystallized. The conventional refrigerator can be used for cooling, and the cooling temperature is set up at a temperature in the range of about 20 to 35 °C. Moreover, lactose is seeded, and the system is cooled down to about 20 to 35 °C and stirred for crystallization.

The condensed milk-like whey composition according to the present invention has a viscosity typically in the range of 1000 to 6000 mPa.s (cP), preferably 1000 to 5000 mPa.s, more preferably 1000 to 4000 mPa·s, further preferably1000 to 3000 mPa·s, further more preferably 1000 to 2000 mPa.s. In this connection, the viscosity can be measured, for example, with a Brookfield type viscometer LVT (manufactured by Brookfield Engineering Laboratories), a B type viscometer (manufactured by TOKIMEC INC.), a tuning-fork type vibro viscometer SV-10 (manufactured by A & D Company, Ltd.) (measuring temperature: 20 °C).

In this connection, the notations of values with "about" and "ca." mean that the variations of values which may be permitted by a person skilled in the art are included in order to accomplish the object by setting up the values.

### EXAMPLES

The present invention is described in detail in the following examples, but is not limited thereto.

### Example 1: Trial manufacturing in practical production scale

After the whey stock solution derived from Gouda cheese (manufactured by MEIJI DAIRIES CO., LTD.) was pre-heated at 73 °C for 15 seconds and then concentrated (solid content: 18% by weight) via a nano-filtration (NF) membrane (NF-3838/30-FF, manufactured by DOW), the concentrate was adjusted to pH 6.5 with NaOH (pH modifier) to get a liquid whey (whey NF concentrate) which was used as the raw material.

The liquid wheys having been heat treated with a tube pasteurizer (manufactured by IWAI KIKAI KOGYO CO., LTD.) at a low temperature for a long time (85 °C, 30 seconds) (Comparative Example 1) and having been preliminarily heat treated with a plate pasteurizer (manufactured by NIPPON APV CO., LTD.) at a high temperature (120 °C, 20 seconds) (Condensed milk-like whey composition 1 of the present invention) were provided, and sugar (sucrose), dextrin, milk protein concentrate (MPC) and hydrogenated palm oils were added to each of the liquid wheys to prepare the liquid whey formulations (raw milk for whey-containing condensed milk).

In this connection, the formulation had the composition shown in Table 1.

[Table 1]

**Table 1: Composition of whey-containing condensed milk (Example)**

| Raw Materials | Blending Amounts (kg) | Blending Concentration (% by weight) |
|---|---|---|
| NF Whey Concentrate (18% by weight) (manufactured by MEIJI DAIRIES CO., LTD.) | 2,990 | 41.97 |
| Sugar (Beet granulated sugar) (manufactured by HOKKAIDO SEIGYO) | 1,362 | 19.12 |
| Dextrin "Pinedex #1" (manufactured by MATSUTANI KAGAKU) . | 111 | 1.56 |
| Milk Protein Concentrate (MPC) "NZMP6631" (manufactured by Fonterra) | 77 | 1.08 |
| Hydrogenated Palm Oil "Cocolin H35" (manufactured by Taiyo Yushi Corp.) | 94 | 1.32 |
| Water | 2,490 | 34.95 |
| Total | 7,124 | 100.00 |

| | | |
|---|---|---|
| * Excluding NaOH (pH modifier). | | |

### (1-i) Comparative Example 1

In the case of a formulation in which a liquid whey without heat treatment was directly used, the formulation was first warmed to a temperature in the range of 85 to 87 °C in a tank, homogenized, heat sterilized with a plate pasteurizer (manufactured by NIPPON APV CO., LTD.) (120 °C, 20 seconds), and then concentrated with a concentrator (manufactured by NIPPON APV CO., LTD) (solid content: 73.2% by weight). Then, the formulation was cooled to about 23 °C and further crystallized in the tank to prepare a condensed milk-like whey composition (whey-containing condensed milk).

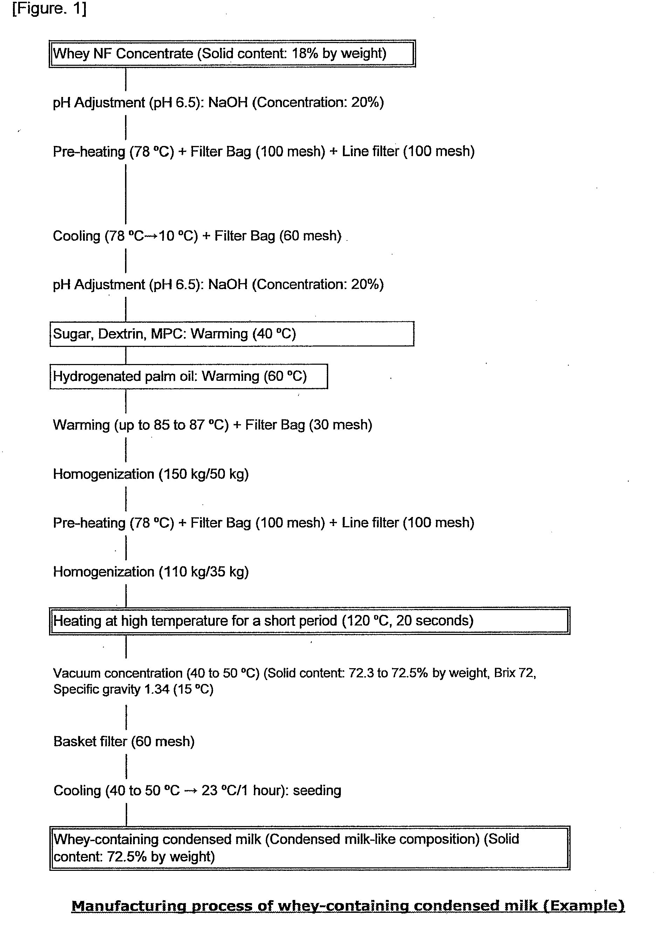

The manufacturing process in this case is shown in Figure 1.

The condensed milk-like whey composition thus obtained (Comparative Example 1) had a viscosity of 2,700 cP, and was rough to the touch and powdery.

In this connection, viscosity was measured with a B type viscometer LVT (manufactured by Brookfield Engineering Laboratories) under the condition of 20 °C.

### (1-ii) Condensed milk-like whey composition 1 according to the present invention

In the case of a formulation in which a liquid whey having been pre-heated at a high temperature was directly used, the formulation was first warmed to a temperature in the range of 85 to 87 °C in a tank, homogenized, heat sterilized with a plate pasteurizer (manufactured by NIPPON APV CO., LTD.) (120 °C, 20 seconds), and then concentrated with a concentrator (manufactured by NIPPON APV CO., LTD) (solid content: 72.4% by weight). Then, the formulation was cooled to about 23 °C and further crystallized in the tank to prepare a condensed milk-like whey composition (whey-containing condensed milk).

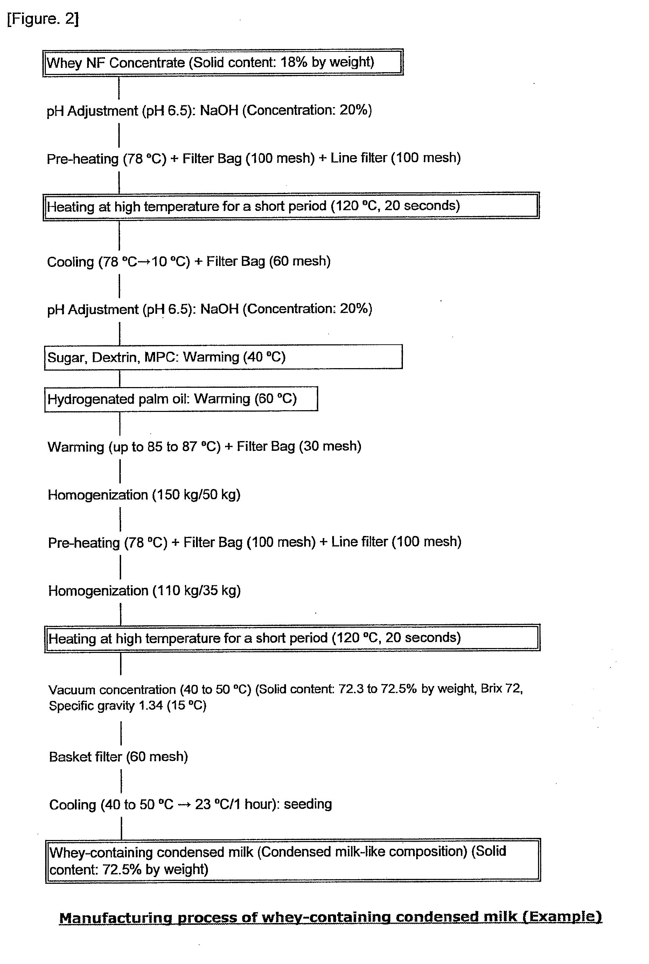

The manufacturing process in this case is shown in Figure 2.

The condensed milk-like whey composition thus obtained (Condensed milk-like whey composition 1) had a viscosity of 1,700 cP, and scorching was scarcely found on the heating surfaces (heat transfer surfaces) of the pasteurizer and concentrator. Besides, in the condensed milk-like whey composition thus obtained, excessive increase in viscosity was scarcely observed and the taste was also good.

### Example2: Trial manufacturing in a pilot plant scale

After the whey stock solution derived from Gouda cheese (manufactured by MEIJI DAIRIES CO., LTD.) was pre-heated at 73 °C for 15 seconds and adjusted to pH 6.5 with NaOH (pH modifier) to get a liquid whey which was used as the raw material.

The liquid wheys, respectively, without heat treatment (Comparative Example 2) and having been heat treated with a plate pasteurizer (manufactured by Alfa Laval) at a high temperature for a short time (125 °C, 8 seconds) (Condensed milk-like whey composition 2 of the present invention) were provided, and sugar (sucrose), dextrin, milk protein concentrate (MPC) and hydrogenated palm oils were added to each of the liquid wheys to prepare the liquid whey formulations (raw milk for whey-containing condensed milk).

In this connection, the formulation had the composition shown in Table 2.

[Table 2]

**Table 2: Composition of whey-containing condensed milk (Example)**

| Raw Materials | Blending Amounts (kg) | Blending Concentration (% by weight) |
|---|---|---|
| Whey Concentrate (6% by weight) (manufactured by MEIJI DAIRIES CO., LTD.) | 299 | 68.45 |
| Sugar (Beet granulated sugar) (manufactured by HOKKAIDO SEIGYO) | 45 | 10.39 |
| Dextrin "Pinedex #1" (manufactured by MATSUTANI KAGAKU) | 4 | 0.85 |
| Milk Protein Concentrate (MPC) "NZMP6631" (manufactured by Fonterra) | 3 | 0.59 |
| Hydrogenated Palm Oil "Cocolin H35" (manufactured by Taiyo Yushi Corp.) | 3 | 0.72 |
| Water | 83 | 19.00 |
| Total | 437 | 100.00 |

| | | |
|---|---|---|
| * Excluding NaOH (pH modifier). | | |

### (2-i) Comparative Example 2

In the case of a formulation in which a liquid whey having been heated at a low temperature for a long period (85 °C, 30 seconds) was used as the raw material, the formulation was first warmed to a temperature in the range of 85 to 87 °C in a tank, and then concentrated with a concentrator (custom-made item) (solid content: 71.8% by weight). Then, the formulation was cooled to about 23 °C and further crystallized in the tank to prepare a condensed milk-like whey composition (whey-containing condensed milk).

The condensed milk-like whey composition thus obtained (Comparative Example 2) had a viscosity of 7,500 cP, and scorching was eminently found on the heating surfaces (heat transfer surfaces) of the pasteurizer and concentrator. Thus, in the condensed milk-like whey composition of Comparative Example 2, the yield (production efficiency) was obviously bad.

### (2-ii) Condensed milk-like whey composition 2 according to the present invention

In the case of a formulation in which a liquid whey having been heated at a high temperature for a short period (125 °C, 8 seconds) was used as the raw material, the formulation was first warmed to a temperature in the range of 85 to 87 °C in a tank, and then concentrated with a concentrator (custom-made item) (solid content: 72.3% by weight). Then, the formulation was cooled to about 23 °C and further crystallized in the tank to prepare a condensed milk-like whey composition (whey-containing condensed milk).

The condensed milk-like whey composition thus obtained (Condensed milk-like whey composition 2) had a viscosity of 1,850 cP, and no excessive increase in viscosity was observed and the taste was also good.

## Claims

1. A whey-containing condensed milk composition which is obtainable by carrying out the heat sterilization and concentration of a liquid whey formulation, wherein the liquid whey formulation is prepared by adding auxiliary materials containing sucrose to a liquid whey preliminarily heated at high temperature.

2. A composition according to Claim 1, wherein the preliminary heat treatment at high temperature is carried out under the temperature condition of 100 to 150 °C for 1 to 30 seconds.

3. A composition according to Claim 1 or 2, wherein the liquid whey has a solid content in the range of 5 to 35% by weight.

4. A composition according to any one of Claims 1 to 3, wherein a whey stock solution as a by-product in the manufacture of cheese is used as the liquid whey.

5. A composition according to any one of Claims 1 to 4, wherein a liquid whey formulation is heat sterilized under the temperature condition of 100 to 150 °C for 1 to 30 seconds.

6. A process for preparing a condensed milk-like whey composition, comprising adding auxiliary materials containing sucrose to a liquid whey preliminarily heated at high temperature to obtain a liquid whey formulation, and heat sterilizing and concentrating the liquid whey formulation.

7. A process according to Claim 6, wherein the heat treatment of the liquid whey at high temperature is carried out under the temperature condition of 100 to 150 °C for 1 to 30 seconds.

8. A process according to Claim 6 or 7, wherein the liquid whey has a solid content of 5 to 35% by weight.

9. A process according to any one of Claims 6 to 8, wherein a whey stock solution as a by-product in the manufacture of cheese is used as the liquid whey.

10. A process according to any one of Claims 6 to 9, wherein the liquid whey formulation is heat sterilized under the temperature condition of 100 to 150 °C for 1 to 30 seconds.
